# EUROPEAN PATENT SPECIFICATION

(11) **EP 1 091 353 B1**
(45) Date of publication and mention of the grant of the patent: **14.03.2012**
(21) Application number: 00120208.4
(22) Date of filing: 25.09.2000
(51) Int. Cl.: G11B 7/12, G11B 33/12, G11B 7/09

(54) **Appliance for reading from or writing to optical recording media**
Schreib- und Wiedergabevorrichtung für optische Aufzeichnungsmedien
Dispositif d'enregistrement et de lecture de supports d'enregistrement optiques

(30) Priority: 07.10.1999 DE 19948320
(43) Date of publication of application: 11.04.2001
(73) Proprietor: Thomson Licensing, 92130 Issy-les-Moulineaux (FR)
(72) Inventor: Schreiber, Michael, 78087 Mönchweiler (DE)
(74) Representative: Thies, Stephan

(56) References cited:
- EP-A- 0 484 906
- US-A- 5 010 246

## Description

The present invention relates to an appliance for reading from or writing to optical recording media, such as a Compact Disc.

Such an appliance normally has an optics unit which has a scanning beam generating means for generating a beam that scans the recording medium, a focusing means for focusing this beam onto a layer which carries information on the recording medium, and a detection means for detecting light coming from the recording medium. The optics unit is arranged on a scanning unit which, for its part, is arranged such that it can move on a baseplate. The mobility of the scanning unit allows it to cover a larger area of the recording medium. The recording medium itself is driven by a drive unit which is arranged on the baseplate. The combination of the two mobility capabilities ensures that all the information-carrying area of the recording medium can be scanned. The scanning unit has a holder for the optics unit and interacts with guide elements and drive elements which ensure exact movement of the drive unit. Furthermore, the appliance has a control unit which evaluates signals produced by the optics unit and produces control signals for the optics unit and/or the scanning unit. The control unit normally has a regulator to regulate a light source in the optics unit, a focus regulator to readjust the focus point of the beam produced by the light source on an information-carrying layer of the recording medium, track regulators to readjust the focus point of the beam produced by the light source along one track of the recording medium and/or regulators to regulate the drive unit for the recording medium, for example to regulate the rotation of a recording medium in the form of a disc, such as a CD. The control unit is thus used to regulate the production of the scanning beam and to allow the scanning beam to be guided with respect to the information storage points. The control unit generally comprises a number of individual elements for the individual functions, and is normally arranged on the baseplate. This allows the scanning unit design to be as simple and compact as possible, in order on the one hand to allow the appliance to have compact form while, on the other hand, allowing the data to be accessed as quickly as possible, since a lightweight scanning unit means that the mass to be accelerated is small. One corresponding appliance is known, for example, from US-A-5,497,366.

US-A-5,010,246 shows an appliance for reading from or writing to optical recording media having an optics unit, a scanning unit on which the optics unit is arranged, a baseplate on which the scanning unit is arranged such that it can be moved, and a control unit which evaluates signals produced by the optics unit, produces control signals for the optics unit, and is arranged on the scanning unit.

The object of the present invention is to indicate one possible way in which an appliance of this generic type for reading from and/or writing to optical recording media can be further improved.

This object is achieved as indicated in the characterizing part of claim 1. Arranging the control unit of the appliance on the scanning unit has the advantage that this allows the appliance to have more compact dimensions since an assembly which is otherwise used to accommodate the control unit may be of smaller design and is mainly used, for example, as a mechanical support. In an ideal situation there may then be no circuits whatsoever mounted directly on this assembly. The invention can be used advantageously particularly when using compact integrated circuits for the control unit and when using an optics unit which allows the control unit to be assembled without any major effort by virtue of its geometric design. A further advantage is that electrical connecting leads from detector elements in the optics unit to the control unit are very short with the solution according to the invention. In consequence, only minor interference influence acts on the normally weak signals emitted from the detector elements. The relatively interference-free signals result in an improved control response. It is likewise unnecessary to take any significant interference suppression measures such as the use of specially designed cables, preamplication of the signals or similar measures.

The control unit is advantageously arranged on a mounting element which, for its part, is mounted on the optics unit. This has the advantage that all the individual elements of the control unit are arranged on the mounting element. These include integrated circuits, individual components such as resistors, capacitors and others, the electrical connections between them and connecting elements to produce electrical connections to the optics unit, for example to detectors or to the light source, and to produce the electrical connections to the baseplate, and thus to the rest of the appliance. Such mounting elements can cost-effectively be produced separately, and connected to the optics unit and the rest of the appliance in some simple way. The time penalty and production costs are thus reduced. Separate functional testing of the individual elements before assembly also results in a reduction in the production scrap. The mounting element is advantageously mounted on the optics unit by bonding or by means of snap or catch connections.

According to one version of the invention, the mounting element is a flexible printed circuit. The advantage of using a so-called flexible printed circuit, also referred to as an FPC for short, is that the flexible circuit is at the same time used to produce the electrical connections to the optics unit, and to produce the electrical connection to the baseplate and thus to the rest of the appliance. The elements in the control unit are advantageously mounted on the flexible printed circuit by soldering.

A further variant of the invention provides for the mounting element to be a printed circuit board, or PCB for short. This has the advantage that a printed circuit board is more cost-effective than a flexible printed circuit. Printed circuit boards can also be designed to be thin while nevertheless being dimensionally stable. This results in a large usable surface area on which elements of the control unit can be arranged. Nevertheless, such a printed circuit board can be designed without any problems to provide a compact geometric shape. Integrated circuits in the control unit are advantageously mounted directly on the printed circuit board using chip-on-board technology, resulting in a small physical height. The printed circuit board is advantageously connected to the rest of the appliance by means of a flexible cable, also referred to as a flexible flat cable, or FFC for short. Such a flexible flat cable is cost-effective while nevertheless offering the desired flexibility by virtue of the mobility of the scanning unit with respect to the baseplate.

The invention provides for a signal processing unit to be arranged on the mounting element, as well. This has the advantage that the output signals from the optics unit are used not only to regulate the individual appliance functions, but also to evaluate the information content. The signal processing unit produces a conditioned data signal, with the conditioning comprising, for example, error correction, error compensation or further conditioning steps. The signal processing unit is also used to output the conditioned signal, which can be used by other components in the appliance, or a number of such signals. A further advantage of this solution is that the output of standardized signals allows further standard modules, which are not specifically matched to the characteristics of the appliance or its scanning unit, to be added, facilitating standard or further appliance functions. Examples of such further functions include the gain of audio signals, appliance remote control, reception of radio signals, volume control, tone control and other characteristics. The capability to combine the appliance and its baseplate and scanning unit which are designed as a unit with other standard modules allows large quantities of identical units to be produced cost-effectively, while nevertheless leading to a wide range of end products by using different combinations.

One development of the invention provides for a vibration compensation unit to be arranged on the mounting element. This has the advantage that faults which may occur when the appliance is shaken can be compensated for with only a small additional space requirement. The vibration compensation unit is arranged close to the control unit or close to the signal processing unit, which results in short cable runs and thus low defect susceptibility as well. According to one variant, a buffer store with an associated control unit is provided as the vibration compensation unit, although the recording medium is read at a higher data rate than that at which it is actually reproduced, and the buffer store content is used to bridge the interruption in the read-out if the track is lost due to vibration, until the point where it is found again. Such a vibration compensation unit is advantageously provided on an integrated circuit which, in the ideal situation, may even be integrated in those integrated circuits in the control unit or signal processing unit. According to a further variant, a shock sensor and a control and regulation unit which varies the control parameters of the appliance as appropriate are provided as the vibration compensation unit. The shock sensor is in this case advantageously an acceleration sensor or motion sensor which can also be designed, in particular, as part of an integrated circuit. Other vibration compensation units and the use of combinations of different vibration compensation units are also within the scope of the invention.

The invention also provides for a driver circuit for driving at least one actuating element of the appliance to be arranged on the mounting element. This has the advantage that this allows short cables to be used between the control unit and the driver circuit and from the driver circuit to the actuating elements arranged on the scanning unit, thus achieving a further reduction in the physical space required. The actuating elements arranged on the scanning unit are, for example, focusing and tracking control elements for the optics unit which are in general designed as electromagnetic coils which influence the position of an objective lens or an actuating element which influences the power of the light source. Actuating elements arranged on the baseplate, such as a motor to drive the scanning unit or a motor to drive the recording medium are also advantageously driven by the driver circuit arranged on the scanning unit. All the driver circuits provided on the scanning unit are advantageously configured in a single integrated circuit, further contributing to a saving in space.

Another variant of the invention provides for a driver circuit for driving at least one of the actuating elements of the appliance to be arranged outside the baseplate and the units arranged on it. This has the advantage that the compactness of the unit comprising the baseplate and the units arranged on it is increased. The driver circuit arranged outside the baseplate can be designed as a cost-effective element, since there is no need to be concerned about compactness, power consumption, heat emission and the like in this case. The driver circuit, which does not need to be optimized for the said criteria, is arranged at some suitable point in the appliance, possibly fairly well away from the baseplate. This variant of the invention increases the flexibility of the configuration of the appliance while still maintaining a standard design for the unit comprising the baseplate and the elements arranged on it. This solution does not, of course, exclude the possibility of using better, more compact or more energy-saving driver circuits when the respective appliance design necessitates this, for example when the appliance is in the form of a compact, portable playback unit, whose energy consumption should be as low as possible.

The invention provides for an optical or mechanical component to be arranged on the mounting element. This has the advantage that further elements required or sensible for operation of the appliance are arranged in the vicinity of the control unit or of the signal processing unit. This leads to short signal paths and thus to low losses and to low interference influences. The use of the mounting element as a platform for the said components results in a saving in the physical space at some other point in the appliance. The component is advantageously a position sensor to determine the position of the scanning unit relative to the baseplate, which is particularly helpful to identify a defined initial position after switching on the appliance. This position sensor may be in either mechanical form, for example as a switch, or in optical form, for example in the form of a light barrier. Optoelectronic or optical elements in the optics unit are likewise advantageously arranged on the mounting element, for example a photodetector, a light source, a simple beam influencing means or the like.

The appliance according to the invention is suitable for reading from and/or writing to optical recording media, which are normally in the form of discs and have information markings arranged on spiral or circular tracks. The information markings are, for example, formed by depressions or projections, have different reflectivity or influence a characteristic of the emitted beam in some other suitable way. However, apart from recording media in the form of discs, such as CDs or DVDs, recording media in the form of tape or some other recording media with information markings arranged in a linear way or some other way may also be provided, in particular where the information markings are provided in a number of layers or in the form of three-dimensionally arranged information markings. The appliance then has an optics unit which is suitable for producing a scanning beam or scanning medium matched to this type of recording medium, and appropriate regulators which control the production of the scanning beam and its guidance to and along the data markings.

It is self-evident that the invention also relates to modifications and developments that are within the field of specialist knowledge. Further advantages of the invention result from the following description of exemplary embodiments, in which:
- Fig. 1: shows a schematic illustration of an appliance according to the invention;
- Fig. 2: shows a part of an appliance according to the invention;
- Fig. 3: shows a part of a variant of an appliance according to the invention;
- Fig. 4: shows a circuit diagram of a first embodiment of the invention;
- Fig. 5: shows a circuit diagram of a second embodiment of the invention.

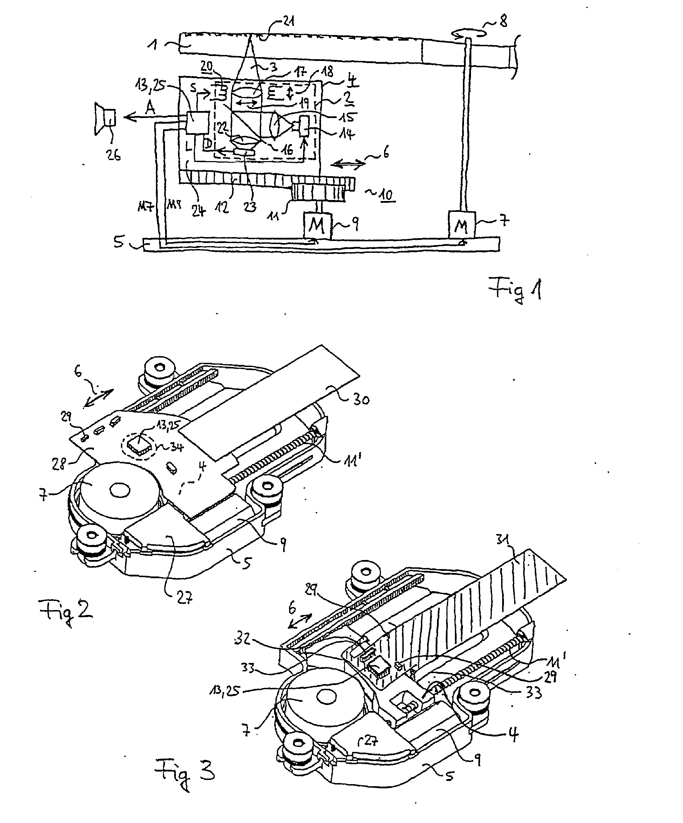

Figure 1 shows a schematic illustration of an appliance according to the invention. An optical recording medium 1, only part of which is shown, in cutaway form here, is scanned by means of a scanning beam 3 produced by an optics unit 2. The optics unit 2 is arranged on a scanning unit 4, which is arranged such that it can move relative to a baseplate 5 of the appliance. This is indicated by means of the double arrow 6. A disc motor 7 is arranged on the baseplate 5 and causes the optical recording medium 1 to rotate. This is indicated by the arrow 8. A further motor 9 for driving the scanning unit 4 is likewise arranged on the baseplate 5. The scanning unit 4 is moved in the radial direction relative to the optical recording medium 1 by means of a gearbox 10, which is represented schematically here by a gearwheel 11, which is driven by the motor 9, and a track rod 12 which is arranged on the scanning unit 4. A control unit 13 is arranged on the scanning unit 4. This emits actuating signals M7, M9 to the disc motor 7 and motor 9, respectively. Furthermore, the control unit 13 passes an actuating signal L to a laser diode 14, which is used as a light source, in the optics unit 2. The laser diode 14 produces a scanning beam 3 which passes through a lens 15 and, as a parallel beam, strikes a semitransparent mirror 16, from which it is reflected in the direction of an objective lens 17. The objective lens 17 can move both in the direction of the scanning beam 3 and at right angles to it. This is indicated by the double arrows 18, 19. Coils 20 are provided as actuating elements to drive the objective lens 17. The scanning beam 3 is focused by the objective lens 17 onto an information-carrying layer 21 of the recording medium 1. After being reflected there, it passes through the objective lens 17, the semitransparent mirror 16 and, after passing through a further lens 22, arrives at a photodetector 23. This has a plurality of detector elements, which are not shown here but whose output signals D are supplied to the control unit 13. The control unit 13 uses these output signals D to determine both the actuating signals M7, M9 and the actuating signals S for the coils 20.

The control unit 13 is arranged on a mounting element 24, which is mounted on the optics unit 2. The control unit 13 also has a signal processing unit 25. This evaluates the output signals D from the photodetector 23 for the information read from the information-carrying layer 21, and emits a conditioned data signal A, for example an audio signal, to other units in the appliance, which pass on the conditioned data signal A. This is indicated here by way of example by means of a loudspeaker 26, which is used to reproduce an audio signal.

Figure 2 shows a perspective view of a part of an appliance according to the invention. Identical elements are provided with the same reference symbols as those in Figure 1. The disc motor 7 and the motor 9 are arranged on the baseplate 5. Located under a cover 27 is a gearbox which drives a spindle 11' which is in turn used to drive the scanning unit 4. The scanning unit 4 in the chosen illustration is covered by a printed circuit board 28 which is used as a mounting element. The printed circuit board 28 is bonded onto the optics unit 2 that is concealed by it. The scanning beam 3 produced by the optics unit 2 falls - downwards in the drawing - onto a recording medium 1 which is not shown. The movement direction of the scanning unit 4 is also indicated by a double arrow 6 here. The control unit 13, formed by an integrated circuit, and the signal processing unit 25 are fitted to and made contact with directly on the printed circuit board 28. Individual components 29 such as resistors, capacitors or further integrated circuits, are indicated only by way of example here. Once again they are fitted to and made contact with directly on the printed circuit board 28. The integrated circuit 13, 25 is normally provided with a protective cover, although this is not shown here to make it easier to identify the components, although it is indicated by the dashed circle 34 whose dimensions reflect it approximately. A flat cable 30 is likewise made direct contact with on the printed circuit board 28 and ensures the electrical connection to other parts of the appliance.

Figure 3 shows a part of an appliance according to the invention in a perspective view corresponding to Figure 2, with a flexible printed circuit 31 being provided here rather than a printed circuit board 28. The control unit 30, signal processing unit 25 and, if required, further elements, are directly soldered onto this circuit 31. Individual components 29 are shown here only by way of example. Furthermore, a driver circuit 32 is arranged on the flexible printed circuit 31. This driver circuit 32 is connected via spurs 33 of the printed circuit 31 to the coils 20, which are not shown here, of the optics unit 2. The optics unit 2 is part of the scanning unit 4, which is likewise illustrated essentially schematically here. The flexible printed circuit 31 furthermore performs the function of the flat cable 30 for connection to other parts of the appliance. The flexible printed circuit 31 is illustrated more schematically here and may have a completely different geometrical shape, configuration and the like. In Figure 3 as well, identical elements are provided with the same reference symbols and if they do not differ from what has already been described they are not mentioned again.

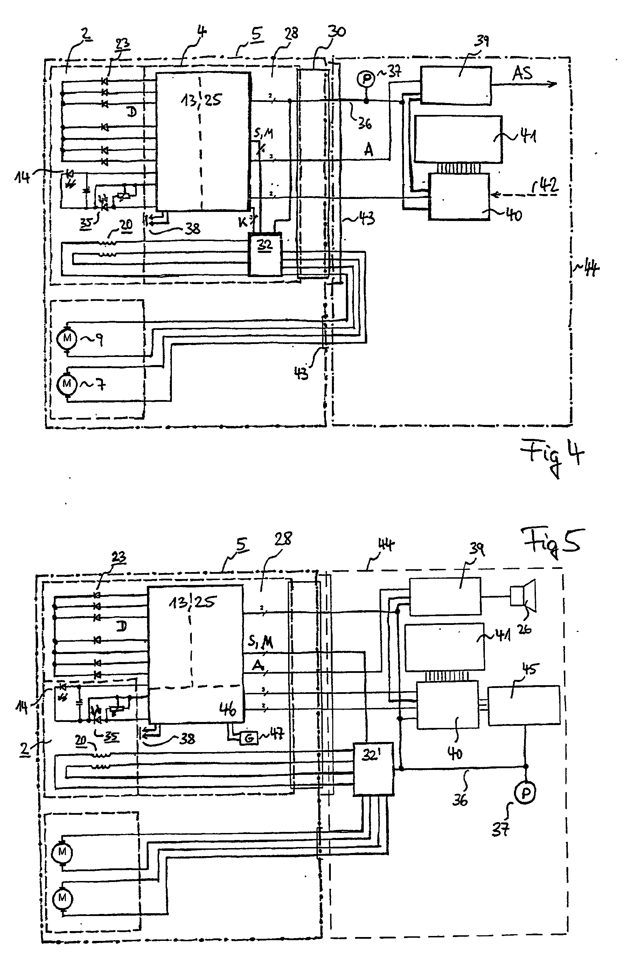

Figure 4 shows a circuit diagram of a first embodiment of the invention. In the area of the optics unit 2, individual detector elements of the photodetector 23 are shown as photodiodes. Their output signals D are supplied to the control unit 13 and to the signal processing unit 25, which are once again designed on a common integrated circuit. The laser diode 14 and a circuit 35 used to control them, together with the coils 20 are also located on the optics unit 2. Apart from the control unit 13, the signal processing unit 25 and further individual components 29, which are not shown here, the items located on the printed circuit board 28 include a driver circuit 32. This is supplied with actuating signals S, M from the control unit 13 with which it then interchanges control signals K. The control unit 13, the signal processing unit 25 and the driver circuit 32 are connected via supply leads 36 to a power source 37. The coils 20 which are arranged on the optics unit 2 are actuated directly by the driver 32. The disc motor 7 and motor 9 are actuated via lines which are routed via the flat cable 30. There is also a switch 38 arranged on the printed circuit board 28, which switch 38 closes when making contact with a stop that is fixed to the housing, thus allowing a defined final position to be detected for the movement of the scanning unit 4. The switch 38 is an example of a mechanical component which is arranged on the printed circuit board 28. One example of an optical component is given further below, with respect to Figure 5.

Further parts of the appliance, which are located outside the baseplate 5 and the components arranged on it, are shown by way of example in the right-hand part of Figure 4. For example, an audio unit 39 receives the conditioned data signal A from the signal processing unit 25, amplifies it and, if necessary, regulates the volume, tone and other control functions and outputs an audio signal AS. A microprocessor 40 is used to control the various devices in the appliance and, to do so, is connected, for example, to a display and input element 41 and a remote control 42 indicated by a dashed arrow. Connecting elements 43 are used to connect the baseplate 5 to the rest 44 of the appliance. The audio unit 39, microprocessor 40 and display and input element 41 are conventional, normally occurring signalprocessing elements which are not matched to use in an appliance for reading from and/or writing to optical recording media. The specialized characteristics are all provided on the components located on the baseplate 5. This simplifies the combination of a standardized component provided on the baseplate 5 with differently configured remaining parts 44 in the appliance according to the invention.

Control devices for controlling or regulating a number of different functions of the scanning unit 4 are advantageously arranged on the printed circuit board 28. These include the regulation of a laser diode 14, the focusing of the light beam onto the recording medium by means of vertical movements of the objective lens 17, the following of a track of data on the recording medium by means of a vertical movement of the objective lens 17, compensation for unacceptable tilting of the light beam with respect to the recording medium due to tilting of the objective lens 17, together with further control and regulation operations with which a person skilled in the art will be familiar. This saves connecting leads to the baseplate 5 and allows the rest of the appliance to be more or less autonomously constructed and operated.

The control unit 13 and, possibly, further elements are advantageously arranged on a cost-effective printed circuit board 28 which is directly arranged on and connected to the scanning unit 4. In this way, it is possible to provide one specific type of scanning unit 4 with printed circuit boards 13 of different design, and in this way to achieve a large number of variations in a cost-effective manner. The printed circuit boards 13 may in this case differ not only in their geometric or physical configuration, but also in their function. The different scanning units can thus be matched to widely differing operational tasks, irrespective of whether this is a high-quality DVD replay or recording appliance, a robust portable CD player, a high-speed data storage or playback unit, or some other application.

Figure 5 shows a circuit diagram of a second embodiment of the invention, with identical parts being provided with the same reference symbols as in Figure 4 and being described in more detail only where there are differences from Figure 4. The printed circuit board 28 differs from that in Figure 4 in that the photodetector 23 is, for example, implemented on it as an optical component, while it has no driver circuit in this embodiment. The optics unit 2 is thus smaller by the photodetector 23. The actuating signals S, M are passed on from the control unit 13 to a driver circuit 32' which is arranged outside the baseplate 5 in the rest 44 of the appliance and, for its part, actuates the coils 20 and the motors 7, 9. The rest 44 of the appliance also has a receiving unit 45 arranged on it which is used, for example, for receiving radio signals. A loudspeaker 26 is provided as an output unit.

A vibration compensation unit 46 is likewise provided on the integrated circuit, forming the control unit 13 and the signal processing unit 35. This unit is connected to an acceleration sensor 47 and is used, when vibration occurs, which can be detected, for example, by the occurrence of high acceleration values, to initiate suitable measures which prevent an interruption in the replay of data from the optical recording medium.

## Claims

1. Appliance for reading from or writing to optical recording media (1) having an optics unit (2), a scanning unit (4) on which the optics unit (2) is arranged, a baseplate (5) on which the scanning unit (4) is arranged such that it can be moved, and a control unit (13) which evaluates output signals (D) produced by the optics unit (2), to produce therefrom actuating control signals (S, L, M9) for the optics unit (2) and the scanning unit (4), and is arranged on the scanning unit (4) via
a mounting element (24) which, for its part, is mounted on the optics unit (2) **characterized in that** a signal processing unit (25) is arranged on the mounting element (24) to produce data signals (A).

2. Appliance according to Claim 1, **characterized in that** the mounting element is a flexible printed circuit (31).

3. Appliance according to Claim 1, **characterized in that** the mounting element is a printed circuit board (28).

4. Appliance according to one of Claims 1 to 3, **characterized in that** a vibration compensation unit (46, 47) is arranged on the mounting element (24).

5. Appliance according to one of Claims 1 to 4, **characterized in that** a driver circuit (32) for driving at least one actuating element (20, 9, 7) of the appliance is arranged on the mounting element (24).

6. Appliance according to one of Claims 1 to 4, **characterized in that** a driver circuit (32') for driving at least one of the actuating elements (20, 9, 7) of the appliance is arranged outside the baseplate (5) and the units arranged on it.

## Patentansprüche

1. Gerät zum Lesen oder Beschreiben optischer Aufzeichnungsträger (1) aufweisend eine Optikeinheit (2), eine Abtasteinheit (4), auf der die Optikeinheit (2) angeordnet ist, eine Grundplatte (5), auf der die abtasteinheit (4) beweglich angeordnet ist und eine Steuereinheit (13), die von der Optikeinheit (2) erzeugte Ausgangssignale (D) auswertet, um davon Ansteuersignal (S, L, M9) für die Optikeinheit (2) und die Abtasteinheit (4) zu erzeugen, und die auf der Abtasteinheit (4) mittels eines Trägerelements (24) angeordnet ist, welches seinerseits an der Optikeinheit (2) befestigt ist, **dadurch gekennzeichnet, daß** auf dem Trägerelement (24) eine Signalverarbeitungseinheit (25) zum Erzeugen von Datensignalen (A) angeordnet ist.

2. Gerät nach Anspruch 1, **dadurch gekennzeichnet, daß** das Trägerelement eine flexible gedruckte Schaltung (31) ist.

3. Gerät nach Anspruch 1, **dadurch gekennzeichnet, daß** das Trägerelement eine Leiterplatte (28) ist.

4. Gerät nach einem der Ansprüche 1 bis 3, **dadurch gekennzeichnet, daß** auf dem Trägerelement (24) eine Erschütterungskompensationseinheit (46, 47) angeordnet ist.

5. Gerät nach einem der Ansprüche 1 bis 4, **dadurch gekennzeichnet, daß** auf dem Trägerelement (24) eine Treiberschaltung (32) zur Ansteuerung zumindest eines Stellelements (20, 9, 7) des Geräts angeordnet ist.

6. Gerät nach einem der Ansprüche 1 bis 4, **dadurch gekennzeichnet, daß** eine Treiberschaltung (32') zur Ansteuerung zumindest eines der Stellelemente (20, 9, 7) des Geräts außerhalb der Grundplatte (5) und der auf ihr angeordneten Einheiten angeordnet ist.

## Revendications

1. Dispositif d'enregistrement et de lecture d'enregistrement optique (1) possédant une unité optique (2), une unité de balayage (4) sur laquelle l'unité optique (2) est disposée, une plaque de base (5) sur laquelle l'unité de balayage (4) est disposée de façon à pouvoir être déplacée, et une unité de contrôle (13) qui évalue les signaux de sortie (D) émis par l'unité optique (2), pour ensuite émettre des signaux de commande de contrôle (S, L, M9) destinés à l'unité optique (2) et à l'unité de balayage (4), et est disposée sur l'unité de balayage (4) par l'intermédiaire d'un élément de montage (24) qui, pour sa part, est monté sur l'unité optique (2) **caractérisée en ce que** une unité de traitement des signaux (25) est disposée sur l'élément de montage (24) afin d'émettre des signaux de données (A).

2. Dispositif selon la revendication 1, **caractérisé en ce que** l'élément de montage est un circuit flexible imprimé (31).

3. Dispositif selon la revendication 1, **caractérisé en ce que** l'élément de montage est une carte de circuit imprimé (28).

4. Dispositif selon l'une des revendications 1 à 3, **caractérisé en ce qu'**une unité de stabilisation (46, 47) est disposée sur l'élément de montage (24).

5. Dispositif selon l'une des revendications 1 à 4, **caractérisé en ce qu'**un circuits de commande (32) contrôlant au moins un des éléments de commande (20, 9, 7) de l'appareil est disposé sur l'élément de montage (24).

6. Dispositif selon l'une des revendications 1 à 4, **caractérisé en ce que** un circuit pilote (32) dirigeant au moins un des éléments de commande (20, 9, 7) de l'appareil est disposé à l'écart de la plaque de base (5) et des unités qui y sont disposées.
